# EUROPÄISCHE PATENTSCHRIFT

(11) **EP 1 691 946 B1**
(45) Veröffentlichungstag und Bekanntmachung des Hinweises auf die Patenterteilung: **04.08.2010**
(21) Anmeldenummer: 04802808.8
(22) Anmeldetag: 24.11.2004
(51) Int. Cl.: B22F 3/11, C22C 1/08

(54) **VERFAHREN ZUR HERSTELLUNG VON GASTURBINENBAUTEILEN UND BAUTEIL FÜR EINE GASTURBINE**
METHOD FOR PRODUCING GAS TURBINE COMPONENTS AND COMPONENT FOR A GAS TURBINE
PROCEDES POUR FABRIQUER DES ELEMENTS DE TURBINE A GAZ ET ELEMENT DE TURBINE A GAZ

(30) Priorität: 10.12.2003 DE 10357656
(43) Veröffentlichungstag der Anmeldung: 23.08.2006
(73) Patentinhaber: MTU Aero Engines GmbH, 80995 München (DE)
(72) Erfinder: MEIER, Reinhold, 84405 Dorfen (DE); STEINHARDT, Erich, 81377 München (DE)
(74) Vertreter: Söllner, Oliver
(86) Internationale Anmeldenummer: PCT/DE2004/002599
(87) Internationale Veröffentlichungsnummer: WO 2005/056220

(56) Entgegenhaltungen:
- WO-A-01/53023
- WO-A-03/015964
- AT-B- 405 946
- DE-A1- 10 206 447
- DE-A1- 19 912 618
- DE-C1- 4 018 360
- US-A- 2 917 384
- US-A- 3 087 807

## Beschreibung

Die Erfindung ein Gasturbinenbauteil nach dem Oberbegriff des Patentanspruchs 1.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden und ein hohes Maß an technischer Perfektion erreicht haben. Bei der Entwicklung von Flugtriebwerken spielt unter anderem die Werkstoffauswahl, die Suche nach neuen, geeigneten Werkstoffen sowie die Suche nach neuen Fertigungsverfahren eine entscheidende Rolle.

Die wichtigsten, heutzutage für Flugtriebwerke oder sonstige Gasturbinen verwendeten Werkstoffe sind Titanlegierungen, Nickellegierungen (auch Superlegierungen genannt) und hochfeste Stähle. Die hochfesten Stähle werden für Wellenteile, Getriebeteile, Verdichtergehäuse und Turbinengehäuse verwendet. Titanlegierungen sind typische Werkstoffe für Verdichterteile. Nickellegierungen sind für die heißen Teile des Flugtriebwerks geeignet.

Als Fertigungsverfahren für Gasturbinenbauteile aus Titanlegierungen, Nickellegierung oder sonstigen Legierungen sind aus dem Stand der Technik in erster Linie das Feingießen sowie Schmieden bekannt. Alle hochbeanspruchten Gasturbinenbauteile, wie zum Beispiel die Schaufeln für einen Verdichter, sind Schmiedeteile. Laufschaufeln und Leitschaufeln der Turbine werden hingegen in der Regel als Feingussteile ausgeführt.

Zur Reduzierung des Gewichts von Gasturbinenbauteilen ist es aus dem Stand der Technik bereits bekannt, Metallmatrix-Verbundwerkstoffe (sogenannte MMC-Werkstoffe) einzusetzen. Bei derartigen MMC-Werkstoffen sind hochfeste Fasern in den Metallwerkstoff eingelagert.

Die Herstellung von Gasturbinenbauteilen aus derartigen MMC-Werkstoffen ist jedoch aufwendig. Weiterhin lassen sich zum Beispiel Laufschaufeln eines Gasturbinenrotors nicht aus derartigen MMC-Werkstoffen herstellen, da Laufschaufeln aus MMC-Werkstoffen lediglich eine begrenzte Festigkeit gegenüber zum Beispiel Vogelschlag aufweisen.

Eine weitere, aus dem Stand der Technik bekannte Vorgehensweise zur Gewichtsreduzierung besteht darin, Gasturbinenbauteile als Hohlbauteile auszuführen. So werden bereits Schaufeln als Hohlschaufeln mithilfe des Diffusionsschweißens hergestellt. Derartige diffusionsgeschweißte Hohlschaufeln sind jedoch teuer.

Da also einerseits Schaufeln aus MMC-Werkstoffen keine ausreichende Belastbarkeit gegenüber zum Beispiel Vogelschlag aufweisen und andererseits Hohlschaufeln zu teuer sind, liegt es im Sinne der hier vorliegenden Erfindung, alternative Möglichkeiten zur Gewichtsreduzierung vorzuschlagen. Die Masse von Leitschaufeln sowie Laufschaufeln trägt nämlich wesentlich zum Gesamtgewicht einer Gasturbine, insbesondere eines Flugtriebwerks bei. Kann das Gewicht der Laufschaufeln reduziert werden, so kann auch der Rotor leichter ausgeführt werden, da der Rotor bei einer Gewichtsreduzierung der Laufschaufeln weniger Fliehkräfte bzw. Zentrifugalkräfte abfangen muss. Je leichter ein Flugtriebwerk ausgeführt werden kann, desto günstiger fällt das sogenannte Schub-Gewichtsverhältnis des Flugtriebwerks aus, welches ein entscheidendes Wettbewerbsmerkmal für Flugtriebwerke darstellt.

Die DE 102 06 447 A1 offenbart ein Verfahren zur Herstellung eines Bauteils aus Metallschaum. Die US-A-3 087 807 offenbart ein Bauteil aus Metallschaum. Hinsichtlich weiteren Standes der Technik sei verwiesen auf DE 199 12 618 A1, auf US-A-2 917 384, auf AT 405 946 B und auf DE 40 18 360 C1.

Hiervon ausgehend liegt der vorliegenden Erfindung das Problem zu Grunde, ein neuartiges Gasturbinenbauteil vorzuschlagen.

Dieses Problem wird dadurch gelöst, dass das eingangs genannte Gasturbinenbauteil durch die Merkmale des kennzeichnenden Teils des Patentanspruchs 1 weitergebildet ist.

Das erfindungsgemäße Gasturbinenbauteil ist zumindest teilweise aus einem Metallschaum gebildet, wobei der Metallschaum eine geschlossene und tragende Außenwand des Bauteils bildet. Im Sinne der hier vorliegenden Erfindung wird vorgeschlagen, dass Gasturbinenbauteile, insbesondere Leitschaufeln sowie Laufschaufeln für einen Verdichter oder eine Turbine eines Flugtriebwerks, zumindest teilweise in Metallschaum auszuführen. Die Verwendung von Metallschäumen ermöglicht eine kostengünstige Alternative gegenüber Hohlschaufeln, wobei bedingt durch die Porosität des Metallschaums eine deutliche Gewichtseinsparung realisierbar ist. Die Aufschäumung erfolgt in einer Form, die während des Aufschäumens aktiv beheizt und aktiv abgekühlt wird, um ein Gasturbinenbauteil mit einer geschlossenen und tragenden Außenwand definierter Wanddicke zu erhalten.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1: ein Blockschaltbild zur Verdeutlichung des erfindungsgemäßen Verfahrens zur Herstellung von Gasturbinenbauteilen;
- Fig. 2: eine erfindungsgemäße Schaufel einer Gasturbine nach einem ersten Ausfüh- rungsbeispiel der Erfindung im Querschnitt;
- Fig. 3: eine erfindungsgemäße Schaufel einer Gasturbine nach einem zweiten Ausfüh- rungsbeispiel der Erfindung im Querschnitt;
- Fig. 4: eine erfindungsgemäße Schaufel einer Gasturbine nach einem dritten Ausfüh- rungsbeispiel der Erfindung im Querschnitt;
- Fig. 5: eine erfindungsgemäße Schaufel einer Gasturbine nach einem weiteren Aus- führungsbeispiel der Erfindung im Querschnitt; und
- Fig. 6: eine erfindungsgemäße Schaufel einer Gasturbine nach einem weiteren Aus- führungsbeispiel der Erfindung im Querschnitt.

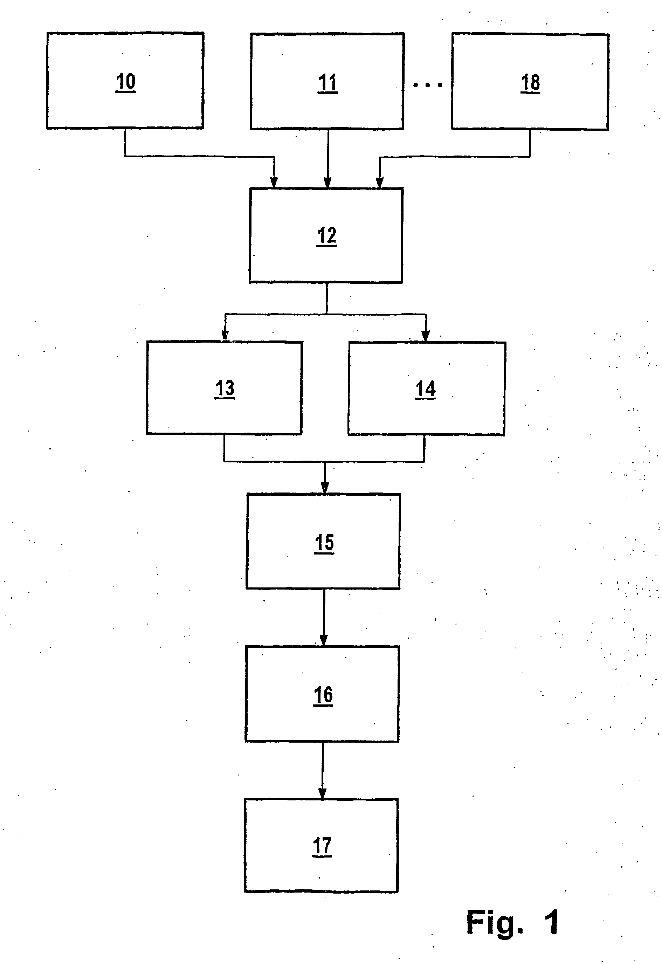

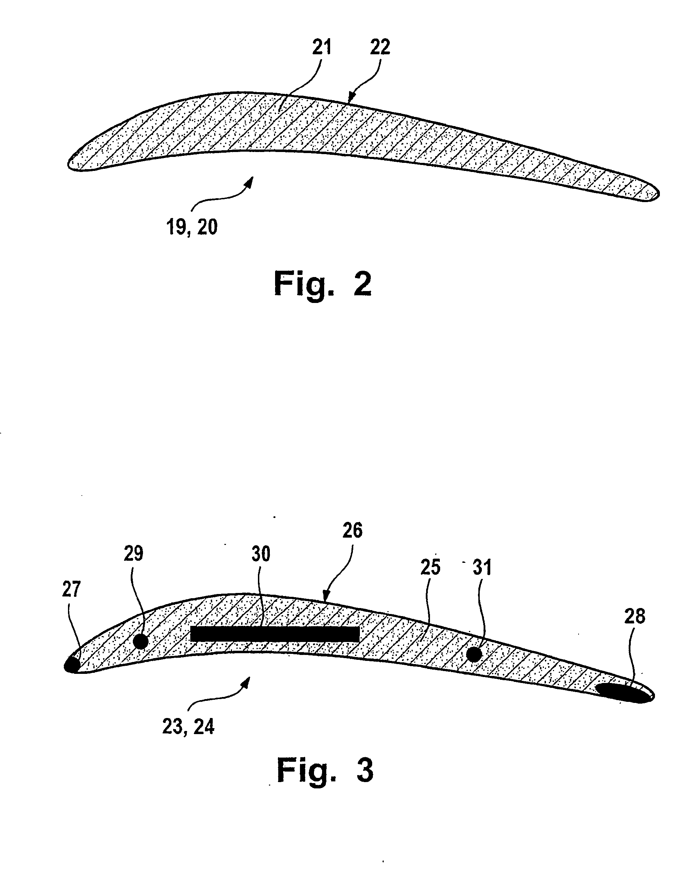

Die hier vorliegende Erfindung wird nachfolgend unter Bezugnahme auf Fig. 1 bis 6 in größerem Detail beschrieben, wobei Fig. 2 bis 6 jeweils im Querschnitt Laufschaufeln einer Gasturbine, nämlich eines Flugtriebwerks, zeigen, die mithilfe des erfindungsgemäßen Verfahrens hergestellt werden.

Zur Herstellung einer Leitschaufeln oder Laufschaufel oder zur Herstellung eines Leitschaufelsegments oder Laufschaufelsegments für ein Flugtriebwerk wird im Sinne des erfindungsgemäßen Verfahrens so vorgegangen, dass in einem ersten Schritt 10 des Verfahrens ein Metallpulver und in einem zweiten Schritt 11 ein Treibmittel bereitgestellt werden. Bei dem bereitgestellten Metallpulver handelt es sich vorzugsweise um ein Metallpulver auf Basis einer Aluminiumlegierung oder Titanlegierung oder Nickellegierung. Es ist möglich, auch Metallpulver auf Basis einer Kobaltlegierung oder einer Eisenlegierung zu verwenden. Des weiteren können Metallpulver aus intermetallischen Titan-AluminiumLegierungen verwendet werden. Als Treibmittel wird insbesondere Titanhydrid bereitgestellt.

Das bereitgestellte Metallpulver sowie das bereitgestellte Treibmittel werden in einem Schritt 12 gemischt. Die sich nach dem Mischen ergebende Mischung aus Metallpulver und Treibmittel wird sodann zu einem Halbzeug verdichtet. Das Verdichten kann entweder im Sinne des Schritts 13 durch Strangpressen oder im Sinne des Schritts 14 durch axiales Heißpressen erfolgen. Am Ende der Verdichtung gemäß Schritt 13 oder Schritt 14 liegt demnach ein Halbzeug vor, was im Abflussdiagramm der Fig. 1 durch den Schritt 15 visualisiert ist. Das Halbzeug ist äußerlich von einem herkömmlichen Metall so gut wie nicht zu unterscheiden, es enthält jedoch das Treibmittel und ist daher aufschäumbar.

Zur Herstellung des Gasturbinenbauteils wird das im Schritt 15 vorliegende Halbzeug im Sinne des Schritts 16 erwärmt, und zwar bis knapp über seinen Schmelzpunkt, sodass das Metall geschmolzen wird und eine Gasfreisetzung des Treibmittels erfolgt. Durch die Gasfreisetzung des Treibmittels wird die Aufschäumung des Halbzeugs ausgelöst. Das Aufschäumen wird solange durchgeführt, bis ein definierter Schäumungsgrad erreicht ist. Sobald dieser definierte Schäumungsgrad erreicht ist, wird die Aufschäumung dadurch beendet, dass eine Abkühlung unter den Schmelzpunkt des verwendeten Metallpulvers erfolgt. Hierdurch wird die Schaumstruktur stabilisiert. Das durch die Erwärmung des Halbzeugs über den Schmelzpunkt des Metallpulver ausgelöste Aufschäumen sowie das entsprechende Beenden der Aufschäumung durch Abkühlung unter den Schmelzpunkt des Metallpulvers sind gemeinsam durch den Schritt 16 visualisiert.

Im Anschluss an den Schritt 16 kann noch eine Oberflächenbearbeitung oder sonstige Bearbeitung bzw. Veredlung des hergestellten Gasturbinenbauteils im Sinne des Schritts 17 erfolgen. Dies ist jedoch optional.

Weiterhin zeigt Fig. 1, dass im Sinne eines Schritts 18 zusätzlich zu dem in Sinne des Schritts 10 bereitgestellten Metallpulver und dem im Sinne des Schritts 11 bereitgestellten Treibmittels weitere Bestandteile mit dem Metallpulver und dem Treibmittel im Schritt 12 vermischt werden können. Bei den weiteren Bestandteilen kann es sich zum Beispiel um ein zusätzliches Metallpulver mit unterschiedlichem Schmelzpunkt oder unterschiedlicher Pulverkörnung, um ein unterschiedliches Treibmittel oder auch um Keramikpartikel, Keramikfasern oder sonstige anorganische oder organische Elemente handeln.

Nachfolgend wird unter Berücksichtung der bevorzugten Herstellung von Schaufeln für Flugtriebwerke auf einige der oben grob beschriebenen Verfahrensschritte in größerem Detail eingegangen. Hierbei handelt es sich im Wesentlichen um den Schritt 16, der das Aufschäumen des Halbzeugs betrifft.

Fig. 2 zeigt einen Querschnitt durch eine erfindungsgemäß ausgebildete Schaufel 19 eines Flugtriebwerks, nämlich durch ein Schaufelblatt 20 derselben. Die Schaufel 19 gemäß Fig. 2 ist im Sinne der hier vorliegenden Erfindung zumindest bereichsweise aus Metallschaum hergestellt, wobei im Ausführungsbeispiel der Fig. 2 ein innerer Kern 21 der Schaufel 19 porös und eine Außenwand 22 derselben geschlossen ausgebildet ist. Zur Herstellung einer derartigen Schaufel 19 mit einem porösen Kern 21 und einer geschlossenen sowie tragenden Außenwand 22 wird während des Schritts 16 ein entsprechendes, aufschäumbares Halbzeug in einer Form aufgeschäumt. Bei der Form handelt es sich um eine aktiv beheizbare sowie aktiv abkühlbare Form. Der Form sind demnach Heizeinrichtungen sowie Kühleinrichtungen zugeordnet, wobei die Heizeinrichtungen sowie Kühleinrichtungen von einer Steuereinrichtung ansteuerbar sind, und wobei mithilfe der Heizeinrichtungen sowie Kühleinrichtungen die Temperatur der Form einem vorgegebenen Temperaturprofil folgen kann. Bei der Form handelt es sich um eine Hohlform aus zum Beispiel Stahlblech, wobei das aufzuschäumende Halbzeug nach dem Aufschäumen die Form vollständig ausfüllt und wobei nach dem Aufschäumen die Form entfernt wird. Auf diese Weise kann die geschlossene sowie tragende Außenwand 22 bereitgestellt werden.

Fig. 3 zeigt eine Schaufel 23 bzw. einen Querschnitt durch ein Schaufelblatt 24 der Schaufel 23 nach einem zweiten Ausführungsbeispiel der Erfindung. Auch beim Ausführungsbeispiel der Fig. 3 ist die Schaufel 23 zumindest teilweise aus Metallschaum hergestellt, wobei die Schaufel 23 einen porösen Kern 25 sowie eine geschlossene sowie tragende Außenwand 26 aufweist. In den Kern 25 der Schaufel 23 sind gemäß Fig. 3 tragende bzw. funktionsrelevante Baugruppen aus einem nicht-aufschäumbaren Werkstoff integriert, die während des Aufschäumens im Sinne des Schritts 16 teilweise oder komplett umschäumt bzw. eingeschäumt werden. Beim Ausführungsbeispiel der Fig. 3 sind insgesamt fünf derartige tragende bzw. funktionsrelevante Baugruppen zumindest teilweise in den Kern 25 eingeschäumt, nämlich eine Baugruppe 27 im Bereich einer Strömungseintrittskante der Schaufel 23, eine Baugruppe 28 im Bereich einer Strömungsaustrittskante derselben sowie drei weitere Baugruppen 29, 30 und 31 im Inneren des Schaufelblatts 24. Die in das Schaufelblatt 24 eingeschäumten Baugruppen 27 bis 31 können entweder aus demselben Material wie der Metallschaum oder aus einem anderen Material bestehen. So ist es möglich, dass bei Verwendung eines Metallschaums auf Basis einer Titanlegierung auch die Baugruppen 27 bis 31 aus einer Titanlegierung bestehen. Es ist jedoch auch möglich, dass es sich bei den Baugruppen 27 bis 31 um Baugruppen aus einer anderen Metalllegierung oder um Baugruppen aus einem keramischen Werkstoff handelt. Bei der Fertigung von Einzelschaufeln, die über einen Schaufelfuß an einem Rotor zu befestigen sind, ist es im Sinne der hier vorliegenden Erfindung bevorzugt, beim Aufschäumen im Sinne des Schritts 16 einen Schaufelfuß aus einem nicht-aufschäumbaren Werkstoff beim Aufschäumen des Halbzeugs teilweise in dasselbe einzuschäumen.

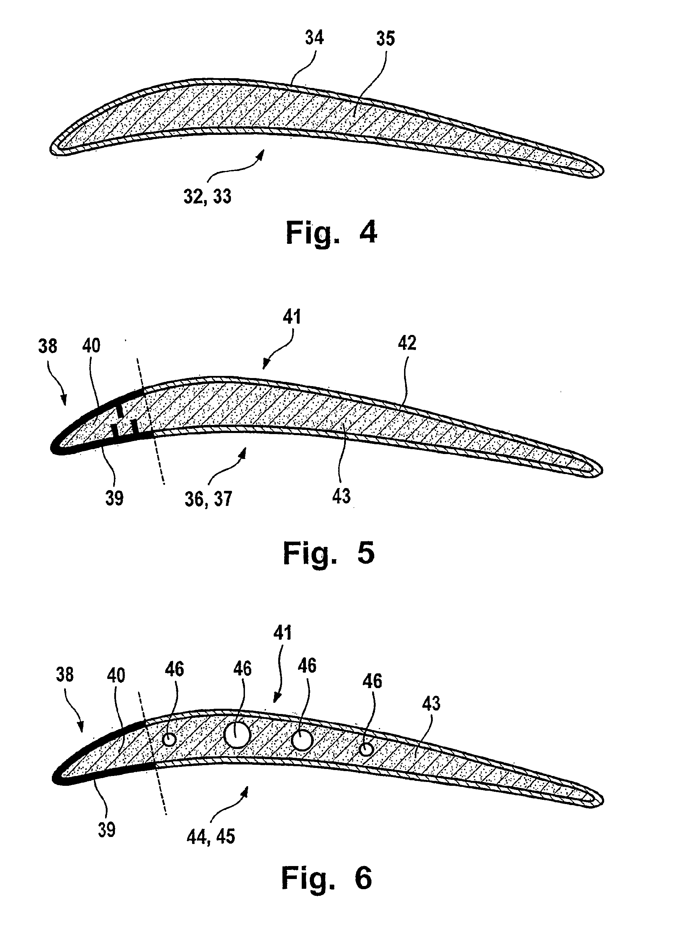

Es liegt weiterhin im Sinne der hier vorliegenden Erfindung, eine Schaufel für ein Flugtriebwerk dadurch herzustellen, dass ein Hohlkörper, der zum Beispiel aus einem faserverstärkten Metall oder einem faserverstärkten Kunststoff oder aus einer intermetallischen Legierung gebildet ist, während des Schritts 16 mit einem Metallschaum auszufüllen, und anschließend den Metallschaum und den Hohlkörper zu einem stoffschlüssigen Verbund zusammenzuschmelzen. So zeigt Fig. 4 eine Schaufel 32, nämlich ein Schaufelblatt 33 derselben, wobei dieselbe aus einem metallischen Hohlkörper 34 gebildet ist, wobei der metallische Hohlkörper von einem Kern 35 aus Metallschaum ausgefüllt ist, und wobei der Kern 35 mit dem Hohlkörper 34 stoffschlüssig verbunden ist. Bei dem Hohlkörper 34 der Fig. 3 handelt es sich um einen einteilig ausgeführten Hohlkörper. Die Außengeometrie der Schaufel 32 wird durch die Außengeometrie des Hohlkörpers 34 bestimmt.

Fig. 5 zeigt ein weiteres Ausführungsbeispiel einer erfindungsgemäß hergestellten Schaufel 36, nämlich einen Querschnitt durch ein Schaufelblatt 37 derselben. Beim Ausführungsbeispiel der Fig. 5 wird ein erster Teil 38 der Schaufel 36, welcher die Strömungseintrittseite der Schaufel 36 bildet, dadurch hergestellt, dass ein Hohlkörper 39 von einem Kern 40 aus Metallschaum ausgefüllt wird, wobei der Kern 40 aus Metallschaum formschlüssig mit dem Hohlkörper 39 verbunden ist. Ein zweiter Teil 41 der Schaufel 36 wird in Analogie zum Ausführungsbeispiel der Fig. 4 dadurch hergestellt, dass ein Hohlkörper 42 mit einem Kern 43 aus Metallschaum ausgefüllt wird, wobei der Kern 43 mit dem Hohlkörper 42 stoffschlüssig verbunden. Bei einer derart zweigeteilt ausgeführten Schaufel 36 verfügen die beiden Hohlkörper 39 sowie 42 vorzugsweise über eine unterschiedliche Materialzusammensetzung, ebenso wie Kerne 40 sowie 43 derselben. Die Kerne 40 und 43 können nicht nur aus einer unterschiedlichen Metalllegierung gebildet sein, sondern auch eine unterschiedliche Porosität aufweisen. Die beiden Teile 38 und 41 der Schaufel 36 können durch einen Fügeprozess, zum Beispiel durch Schweißen oder Löten, miteinander verbunden werden.

Im Sinne der hier vorliegenden Erfindung sind viele weitere Alternativen möglich. So liegt es im Sinne der hier vorliegenden Erfindung, Metallpulver mit unterschiedlichen Schmelzpunkten mit dem Treibmittel zu vermischen, um so eine lokal variable Steifigkeit bzw. Belastbarkeit der Schaufeln zu gewährleisten. Weiterhin liegt es im Sinne der hier vorliegenden Erfindung, Metallpulver mit unterschiedlichen Pulverkörnungen zu verwenden, um so die Porosität des sich einstellenden Metallschaums gezielt zu beeinflussen. Weiterhin können keramische Pulver oder auch keramische Fasern mit einem Metallpulver und dem Treibmittel vermischt und zu einem aufschäumbaren Halbzeug verdichtet werden. Auch hierdurch lässt sich die Stabilität des sich ausbildenden Metallschaums bzw. Bauteils gezielt beeinflussen.

Fig. 6 zeigt ein weiteres Ausführungsbeispiel einer erfindungsgemäß hergestellten Schaufel 44, nämlich einen Querschnitt durch ein Schaufelblatt 45 der Schaufel 44. Das Ausführungsbeispiel der Fig. 6 entspricht im Wesentlichen dem Ausführungsbeispiel der Fig. 5. Daher werden zur Vermeidung unnötiger Wiederholungen für gleiche Baugruppen gleiche Bezugsziffern verwendet. Das Ausführungsbeispiel der Fig. 6 unterscheidet sich vom Ausführungsbeispiel der Fig. 5 dadurch, dass in den Kern 43 des zweiten Teils 41 der Schaufel 44 funktionsrelevante Baugruppen 46 durch Umschäumen derselben integriert sind. Bei den funktionsrelevanten Baugruppen 46 handelt es sich um Hohlkörper, welche Strömungskanäle zur kontrollierten Ausblasung bzw. Absaugung eines Strömungsmediums aus dem Hauptströmungskanal der Gasturbine dienen. Mithilfe der Erfindung sind demnach Schaufeln mit integrierten Strömungskanälen auf einfache Art und Weise herstellbar.

Im Zusammenhang mit Fig. 2 bis 6 wurden unterschiedliche Ausführungsbeispiele erfindungsgemäß ausgebildeter Schaufeln beschrieben. Im Sinne der hier vorliegenden Erfindung sind selbstverständlich auch Schaufelsegmente aus mehreren Einzelschaufeln sowie integral beschaufelte Rotoren herstellbar. Integral beschaufelte Rotoren lassen sich zum Beispiel dadurch herstellen, dass einzelne Schaufeln im Sinne der Ausführungsbeispiele gemäß Fig. 2 bis 6 über entsprechend teilweise in die Schaufeln eingeschäumte Schaufelfüße an geschmiedeten oder gegossenen, scheibenförmigen oder ringförmigen Rotorträger befestigt werden. Das Befestigen der Schaufeln an dem Rotorträger kann durch Löten oder Schweißen oder andere Fügeverfahren erfolgen. Es sei nochmals darauf hingewiesen, dass im Sinne der hier vorliegenden Erfindung sowohl Einzelschaufeln als auch Schaufelsegmente für integral beschaufelte Rotoren ganz oder teilweise aus Metallschaum hergestellt werden können. Bei den Schaufeln kann es sich um Leitschaufeln oder Laufschaufeln und bei den Schaufelsegmenten um Leitschaufelsegmente oder Laufschaufelsegmente für einen Verdichter oder eine Turbine eines Flugtriebwerks handeln. Weiterhin können Strömungsrippen oder Schaufeln für Lüfter (Fans) im Sinne der hier vorliegenden Erfindung hergestellt werden.

Wie bereits oben erwähnt, kann ein im Sinne der Erfindung hergestelltes Gasturbinenbauteil im Sinne des Schritts 17 einer Weiterverarbeitung bzw. Veredlung unterzogen werden. So liegt es zum Beispiel im Sinne der hier vorliegenden Erfindung, während des Schritts 17 Oberflächen von Schaufeln mit einer Oxidationsschutzschicht oder Korrosionsschutzschicht zu beschichten. Weiterhin können die hergestellten Bauteile einem sogenannten Nachschmieden unterzogen werden. Weiterhin ist eine Beplankung der durch Aufschäumen hergestellten Bauteile mit Blechen, faserverstärkten Schichten oder Folien aus faserverstärktem Metall möglich.

Im Sinne der hier vorliegenden Erfindung wird demnach vorgeschlagen, gewichtsreduzierte Schaufeln, Schaufelsegmente oder integral beschaufelte Rotoren dadurch herzustellen, dass die Schaufeln oder Schaufelsegmente zumindest teilweise aus Metallschaum hergestellt werden. Die Erfindung stellt eine gegenüber der Herstellung von diffusionsgeschweißten Hohlschaufeln kostengünstige Alternative bereit. Durch Metallschaum hergestellte Schaufeln, Schaufelsegmente oder integral beschaufelte Rotoren sind des weiteren impacttoleranter als entsprechende Gasturbinenbauteile aus sogenannten MMC-Werkstoffen.

## Patentansprüche

1. Gasturbinenbauteil, insbesondere Schaufel (19, 23, 32, 36, 44), Schaufelsegment oder integral beschaufelter Rotor für ein Flugtriebwerk, wobei dasselbe zumindest teilweise aus einem Metallschaum gebildet ist, **dadurch gekennzeichnet, dass** der Metallschaum eine geschlossene und tragende Außenwand des Bauteils bildet.

2. Gasturbinenbauteil nach Anspruch 1, **dadurch gekennzeichnet, dass** der Metallschaum eine an die Geometrie des Bauteils angepasste, lokal variable Porosität aufweist.

3. Gasturbinenbauteil nach Anspruch 1 oder 2, **dadurch gekennzeichnet, dass** in den Metallschaum keramische Partikel und/oder keramische Fasern eingelagert sind.

4. Gasturbinenbauteil nach einem oder mehreren der Ansprüche 1 bis 3, **dadurch gekennzeichnet, dass** in den Metallschaum mindestens eine tragende und/oder funktionsrelevante Baugruppe aus einem nicht-aufschäumbaren Werkstoff zumindest teilweise eingeschäumt ist.

5. Gasturbinenbauteil nach einem oder mehreren der Ansprüche 1 bis 4, **dadurch gekennzeichnet, dass** dasselbe als Schaufel (19, 23, 32, 36, 44), insbesondere als Verdichterschaufel oder als Turbinenschaufel für ein Flugtriebwerk, ausgebildet ist, wobei die Schaufel (19, 23, 32, 36, 44) aus einem Metallschaum mit einer geschlossenen Außenwand und einem teilweise eingeschäumten Schaufelfuß aus einem nicht-aufschäumbaren Werkstoff gebildet ist.

6. Gasturbinenbauteil nach einem oder mehreren der Ansprüche 1 bis 5, **dadurch gekennzeichnet, dass** dasselbe durch ein Verfahren hergestellt ist, welches folgende Schritte umfasst: a) Bereitstellen mindestens eines Metallpulvers (10) und mindestens eines Treibmittels (11); b) Mischen (12) des oder jedes Metallpulvers mit dem oder jedem Treibmittel; c) Verdichten (13, 14) der entstehenden Mischung zu mindestens einem Halbzeug (15); d) Aufschäumen (16) des oder jeden Halbzeugs in einer Form bis zu einem definierten Schäumungsgrad durch Erwärmung; e) Beenden der Aufschäumung (16) bei Erreichen des definierten Schäumungsgrads durch Abkühlung, wobei die Form während des Aufschäumens (16) aktiv beheizt und aktiv abgekühlt wird, so dass ein Gasturbinenbauteil mit einer geschlossenen und tragenden Außenwand definierter Wanddicke erzielt wird.

7. Gasturbinenbauteil nach Anspruch 6, **dadurch gekennzeichnet, dass** als Metallpulver (10) eine Aluminiumbasislegierung und/oder eine Titanbasislegierung und/oder eine Nickelbasislegierung und/oder eine intermetallische Legierung bereitgestellt wird.

8. Gasturbinenbauteil nach Anspruch 6 oder 7, **dadurch gekennzeichnet, dass** als Treibmittel (11) Titanhydrid bereitgestellt wird.

9. Gasturbinenbauteil nach einem oder mehreren der Ansprüche 6 bis 8, **dadurch gekennzeichnet, dass** die Mischung aus dem oder jedem Metallpulver mit dem oder jedem Treibmittel durch Strangpressen (13) oder axiales Pressen (14) zu dem Halbzeug verdichtet wird.

10. Gasturbinenbauteil nach einem oder mehreren der Ansprüche 6 bis 9, **dadurch gekennzeichnet, dass** Metallpulver mit unterschiedlichem Schmelzpunkt mit dem oder jedem Treibmittel gemischt werden.

11. Gasturbinenbauteil nach einem oder mehreren der Ansprüche 6 bis 10, **dadurch gekennzeichnet, dass** Metallpulver mit unterschiedlichen Pulverkörnungen mit dem oder jedem Treibmittel gemischt werden.

12. Gasturbinenbauteil nach einem oder mehreren der Ansprüche 6 bis 11, **dadurch gekennzeichnet, dass** das Metallpulver mit dem Treibmittel und zusätzlich mit keramischen Partikeln und/oder keramischen Fasern gemischt wird.

13. Gasturbinenbauteil nach einem oder mehreren der Ansprüche 6 bis 12, **dadurch gekennzeichnet, dass** beim Aufschäumen (16) des Halbzeugs mindestens eine tragende und/oder funktionsrelevante Baugruppe (27, 28, 29, 30, 31, 46) aus einem nicht-aufschäumbaren Werkstoff zumindest teilweise umschäumt oder eingeschäumt wird.

14. Gasturbinenbauteil nach Anspruch 13, **dadurch gekennzeichnet, dass** das aufzuschäumende Halbzeug und die teilweise zu umschäumende bzw. einzuschäumende Baugruppe aus demselben Werkstoff oder aus unterschiedlichen Werkstoffen gebildet sind.

15. Gasturbinenbauteil nach Anspruch 13 oder 14, **dadurch gekennzeichnet, dass** zur Herstellung einer Schaufel (19, 23, 32, 36, 44) , insbesondere einer Verdichterschaufel oder einer Turbinenschaufel für ein Flugtriebwerk, das Halbzeug in einer Form aufgeschäumt wird, wobei ein Schaufelfuß aus einem nicht-aufschäumbaren Werkstoff beim Aufschäumen (16) des Halbzeugs teilweise eingeschäumt bzw. umschäumt wird.

16. Gasturbinenbauteil nach Anspruch 13 oder 14, **dadurch gekennzeichnet, dass** zur Herstellung einer Schaufel (44), insbesondere einer Verdichterschaufel oder einer Turbinenschaufel für ein Flugtriebwerk, mit mindestens einem integrierten Strömungskanal das Halbzeug in einer Form aufgeschäumt wird, wobei mindestens eine den Strömungskanal bildende Baugruppe (46) beim Aufschäumen des Halbzeug umschäumt wird.

17. Gasturbinenbauteil nach einem oder mehreren der Ansprüche 6 bis 15, **dadurch gekennzeichnet, dass** zur Herstellung eines integral beschaufelten Rotors einzelne Schaufeln oder Schaufelsegmente durch Aufschäumen des entsprechenden Halbzeugs in einer Form bereitgestellt werden, wobei die so bereitgestellten Schaufeln oder Schaufelsegmente mit einem geschmiedeten oder gegossenen Rotorträger durch einen Fügeprozess, insbesondere durch Löten oder Schweißen, fest verbunden werden.

18. Gasturbinenbauteil nach einem oder mehreren der Ansprüche 6 bis 17, **dadurch gekennzeichnet, dass** im Anschluss an das Abkühlen eine Nachbearbeitung (17) des Bauteils durchgeführt wird, insbesondere eine Beschichtung der Oberfläche des Bauteils.

## Claims

1. A gas turbine component, in particular a blade (19, 23, 32, 36, 44), a blade segment or an integrally bladed rotor for an aircraft engine, wherein the same is formed at least in part from a metal foam, **characterised in that** the metal foam forms a closed and bearing outer wall of the component.

2. A gas turbine component according to claim 1, **characterised in that** the metal foam has a locally variable porosity that is adapted to the geometry of the component.

3. A gas turbine component according to claim 1 or 2, **characterised in that** ceramic particles and/or ceramic fibres are incorporated in the metal foam.

4. A gas turbine component according to one or more of claims 1 to 3, **characterised in that** at least one bearing and/or functionally relevant assembly of a non-foamable material is at least partly foamed into place in the metal foam.

5. A gas turbine component according to one or more of claims 1 to 4, **characterised in that** the same is formed as a blade (19, 23, 32, 36, 44), in particular as a compressor blade or as a turbine blade for an aircraft engine, wherein the blade (19, 23, 32, 36, 44) is formed from a metal foam with a closed outer wall and a blade base of a non-foamable material that is partly foamed into place.

6. A gas turbine component according to one or more of claims 1 to 5, **characterised in that** the same is produced by means of a method that comprises the following steps: a) provision of at least one metal powder (10) and at least one expanding agent (11); b) mixing (12) of the or each metal powder with the or each expanding agent; c) compression (13, 14) of the resultant mixture to form at least one semi-finished product (15); d) foaming-up (16) of the or each semi-finished product in a mould to a defined degree of foaming by means of heating; e) termination of the foaming-up (16) upon reaching the defined degree of foaming by means of cooling, wherein during the foaming-up (16) the mould is actively heated and actively cooled so that a gas turbine component is obtained with a closed and bearing outer wall of defined wall thickness.

7. A gas turbine component according to claim 6, **characterised in that** an aluminium base alloy and/or a titanium base alloy and/or a nickel base alloy and/or an intermetallic alloy is provided as the metal powder (10).

8. A gas turbine component according to claim 6 or 7, **characterised in that** titanium hydride is provided as the expanding agent (11).

9. A gas turbine component according to one or more of claims 6 to 8, **characterised in that** the mixture of the or each metal powder with the or each expanding agent is compressed by means of extrusion (13) or axial pressing (14) to form the semi-finished product.

10. A gas turbine component according to one or more of claims 6 to 9, **characterised in that** metal powders with different melting points are mixed with the or each expanding agent.

11. A gas turbine component according to one or more of claims 6 to 10, **characterised in that** metal powders with different powder granulations are mixed with the or each expanding agent.

12. A gas turbine component according to one or more of claims 6 to 11, **characterised in that** the metal powder is mixed with the expanding agent and additionally with ceramic particles and/or ceramic fibres.

13. A gas turbine component according to one or more of claims 6 to 12, **characterised in that** when foaming up (16) the semi-finished product at least one bearing and/or functionally relevant assembly (27, 28, 29, 30, 31, 46) of a non-foamable material is at least partly enclosed by the foaming or is foamed into place.

14. A gas turbine component according to claim 13, **characterised in that** the semi-finished product that is to be foamed up and the assembly that is to be partly enclosed by the foaming or foamed into place are formed from the same material or from different materials.

15. A gas turbine component according to claim 13 or 14, **characterised in that** in order to produce a blade (19, 23, 32, 36, 44), in particular a compressor blade or a turbine blade for an aircraft engine, the semi-finished product is foamed up in a mould, wherein a blade base of a non-foamable material is partly enclosed by the foaming or is foamed into place when foaming up (16) the semi-finished product.

16. A gas turbine component according to claim 13 or 14, **characterised in that** in order to produce a blade (44), in particular a compressor blade or a turbine blade for an aircraft engine, having at least one integrated flow channel the semi-finished product is foamed up in a mould, wherein at least one assembly (46) that forms the flow channel is enclosed by the foaming when foaming up the semi-finished product.

17. A gas turbine component according to one or more of claims 6 to 15, **characterised in that** in order to produce an integrally bladed rotor, individual blades or blade segments are provided by foaming up the corresponding semi-finished product in a mould, wherein the blades or blade segments thus provided are fixedly connected to a forged or cast rotor carrier by means of a joining process, in particular by soldering or welding.

18. A gas turbine component according to one or more of claims 6 to 17, **characterised in that** following on from the cooling, subsequent processing (17) of the component, in particular coating of the surface of the component, is carried out.

## Revendications

1. Élément de turbine à gaz, en particulier aube (19, 23, 32, 36, 44), segment d'aube ou rotor à aubage intégral pour un groupe motopropulseur, celui-ci étant formé au moins en partie par une mousse métallique, **caractérisé en ce que** la mousse métallique forme une paroi extérieure fermée et porteuse de l'élément.

2. Élément de turbine à gaz selon la revendication 1, **caractérisé en ce que** la mousse métallique présente une porosité variable localement, adaptée à la géométrie de l'élément.

3. Élément de turbine à gaz selon la revendication 1 ou 2, **caractérisé en ce que** des particules céramiques et/ou des fibres céramiques sont intercalées dans la mousse métallique.

4. Élément de turbine à gaz selon l'une ou plusieurs quelconques des revendications 1 à 3, **caractérisé en ce qu'**au moins un élément porteur et/ou important pour le fonctionnement en un matériau ne pouvant pas être moussé est moussé au moins partiellement dans la mousse métallique.

5. Élément de turbine à gaz selon l'une ou plusieurs quelconques des revendications 1 à 4, **caractérisé en ce que** celui-ci est réalisé comme une aube (19, 23, 32, 36, 44) en particulier comme une aube de compresseur ou comme une aube de turbine pour un groupe motopropulseur, l'aube (19, 23, 32, 36, 44) étant formée par une mousse métallique avec une paroi extérieure fermée et une emplanture d'aube partiellement moussée en un matériau ne pouvant pas être moussé.

6. Élément de turbine à gaz selon l'une ou plusieurs quelconques des revendications 1 à 5, **caractérisé en ce que** celui-ci est fabriqué par un procédé qui comprend les étapes suivantes : a) mise à disposition d'au moins une poudre métallique (10) et d'au moins un produit moussant (11) ; b) mélange (12) de la ou de chaque poudre métallique avec le ou chaque produit moussant ; c) compactage (13, 14) du mélange apparu pour former au moins un demi-produit (15) ; d) moussage (16) du ou de chaque demi-produit dans un moule jusqu'à un degré de moussage défini par chauffage ; e) fin du moussage (16) lors de l'atteinte du degré de moussage défini par refroidissement, le moule étant chauffé et refroidi activement pendant le moussage (16) de sorte qu'un élément de turbine à gaz avec une paroi extérieure fermée et porteuse d'épaisseur de paroi définie soit obtenu.

7. Élément de turbine à gaz selon la revendication 6, **caractérisé en ce qu'**un alliage à base d'aluminium et/ou un alliage à base de titane et/ou un alliage à base de nickel et/ou un alliage intermétallique est mis à disposition comme poudre métallique (10).

8. Élément de turbine à gaz selon la revendication 6 ou 7, **caractérisé en ce que** de l'hydrure de titane est mis à disposition comme produit moussant (11).

9. Élément de turbine à gaz selon l'une ou plusieurs quelconques des revendications 6 à 8 **caractérisé en ce que** le mélange de la ou de chaque poudre métallique et du ou de chaque produit moussant est compressé par extrusion (13) ou pressage axial (14) pour former un demi-produit.

10. Élément de turbine à gaz selon l'une ou plusieurs quelconques des revendications 6 à 9, **caractérisé en ce que** des poudres métalliques avec un point de fusion différent sont mélangées avec le ou chaque produit moussant.

11. Élément de turbine à gaz selon l'une ou plusieurs quelconques des revendications 6 à 10, **caractérisé en ce que** des poudres métalliques avec des granulations de poudre différentes sont mélangées avec le ou chaque produit moussant.

12. Élément de turbine à gaz selon l'une ou plusieurs quelconques des revendications 6 à 11, **caractérisé en ce que** la poudre métallique est mélangée au produit moussant et de plus avec des particules céramiques et/ou des fibres céramiques.

13. Élément de turbine à gaz selon l'une ou plusieurs quelconques des revendications 6 à 12, **caractérisé en ce que** lors du moussage (16) du demi-produit, au moins un élément (27, 28, 29, 30, 31, 46) porteur et/ou important pour le fonctionnement en un matériau ne pouvant pas être moussé est revêtu de mousse ou moussé au moins en partie.

14. Élément de turbine à gaz selon la revendication 13, **caractérisé en ce que** le demi-produit à mousser et l'élément à revêtir de mousse ou mousser en partie sont constitués du même matériau ou de matériaux différents.

15. Élément de turbine à gaz selon la revendication 13 ou 14, **caractérisé en ce que** pour la fabrication d'une aube (19, 23, 32, 36, 44), en particulier d'une aube de compresseur ou d'une aube de turbine pour un groupe motopropulseur, le demi-produit est moussé dans un moule, une emplanture d'aube en un matériau ne pouvant pas être moussé étant moussée ou revêtue de mousse en partie los du moussage (16) du demi-produit.

16. Élément de turbine à gaz selon la revendication 13 ou 14, **caractérisé en ce que** pour la fabrication d'une aube (44), en particulier d'une aube de compresseur ou d'une aube de turbine pour un groupe motopropulseur, le demi-produit étant moussé dans un moule avec au moins un canal d'écoulement intégré, au moins un élément (46) formant le canal d'écoulement étant revêtu de mousse lors du moussage du demi-produit.

17. Élément de turbine à gaz selon l'une ou plusieurs quelconques des revendications 6 à 15, **caractérisé en ce que** pour la fabrication d'un rotor à aubage intégral, des aubes ou segments d'aube individuels sont mis à disposition par moussage du demi-produit correspondant dans un moule, les aubes ou segments d'aube ainsi mis à disposition étant reliés fixement à un support de rotor moulé ou forgé par un processus d'assemblage, en particulier par brasage ou soudage.

18. Élément de turbine à gaz selon l'une ou plusieurs quelconques des revendications 6 à 17, **caractérisé en ce qu'**à la suite du refroidissement, un réusinage (17) de l'élément est réalisé, en particulier un revêtement de la surface de l'élément.
